Europäisches Patentamt

European Patent Office

Office européen des brevets

(11) Veröffentlichungsnummer: **0 484 569 A1**

## (12) EUROPÄISCHE PATENTANMELDUNG

(21) Anmeldenummer: **90121198.7**

(22) Anmeldetag: **06.11.90**

(51) Int. Cl.⁵: **G01N 27/00**

(43) Veröffentlichungstag der Anmeldung:
**13.05.92 Patentblatt 92/20**

(84) Benannte Vertragsstaaten:
**AT BE CH DE DK ES FR GB GR IT LI LU NL SE**

(71) Anmelder: **ASEA BROWN BOVERI AG**

**CH-5401 Baden(CH)**

(72) Erfinder: **Gribi, Walter**
**Lindenhof 25**
**CH-5430 Wettingen(CH)**
Erfinder: **Jülke, Elias, Dr.**
**Kornstrasse 5**
**CH-5430 Wettingen(CH)**
Erfinder: **Schultheis, Lothar, Dr.**
**Zelglistrasse 12b**
**CH-5442 Fislisbach(CH)**

(54) **Vorrichtung zur Messung von Schwefelhexafluorid-Zersetzungsprodukten.**

(57) Die Vorrichtung dient der Messung der bei einer elektrischen Entladung in $SF_6$-haltiger Atmosphäre entstehenden Zersetzungsprodukte.

Diese Vorrichtung soll sich trotz geringer Abmessungen durch einen einfachen und robusten Aufbau auszeichnen.

Dies wird durch zwei im $SF_6$ befindliche und jeweils in einem ersten (8) oder zweiten (7) Schwingkreis angeordnete und mit den Zersetzungsprodukten chemisch reagierende Oszillatoren (13,14) erreicht, von denen ein erster (14) den Zersetzungsprodukten ausgesetzt und ein zweiter (7) davor geschützt ist. Die Vorrichtung weist ferner eine Vergleichsvorrichtung (11) auf, welcher die Ausgangssignale des ersten (8) und des zweiten (7) Schwingkreises zugeführt werden.

Fig. 2

EP 0 484 569 A1

Technisches Gebiet

Bei der Erfindung wird ausgegangen von einer Vorrichtung zur Messung der bei einer elektrischen Entladung in schwefelhexafluorid($SF_6$)-haltiger Atmosphäre gebildeten Zersetzungsprodukte.

In mit $SF_6$-haltigem Gas isolierten elektrischen Anlagen sind Isolatoroberflächen und spannungsführende Teile durch eine im allgemeinen metallisch ausgebildete Kapselung vor atmosphärischen Verunreinigungen geschützt. Im Kapselungsinneren können jedoch aufgrund von Teilentladungen, Korona oder vor allem Schaltlichtbögen Zersetzungsprodukte von SF6 entstehen, welche zusammen mit kaum zu vermeidender Restfeuchtigkeit zu Korrosion und Verminderung des Oberflächenwiderstandes der Isolatoren führen können. Für einen zuverlässigen Betrieb von gasisolierten gekapselten Anlagen kann eine Bestimmung der schädlichen Zersetzungsprodukte daher insbesondere dann von Bedeutung sein, wenn häufig und vor allem unter Last oder bei Kurzschluss geschaltet wird.

Stand der Technik

Eine Vorrichtung der eingangs genannten Art ist etwa aus ASEA-Zeitschrift 1980 Jahrgang 25 Heft 2 S.33 ff bekannt. Bei dieser Vorrichtung wird die Zunahme der Zersetzungsprodukte während Ausschaltversuchen in einem SF6-gefüllten und eine Funkenstrecke enthaltendem Kessel mit einer gaschromatographischen Anlage analysiert.

Darstellung der Erfindung

Der Erfindung, wie sie in Patentanspruch 1 definiert ist, liegt die Aufgabe zugrunde, eine Vorrichtung der eingangs genannten Art anzugeben, welche trotz geringer Abmessungen und einem einfachen und robusten Aufbau eine Messung der SF6-Zersetzungsprodukte ermöglicht.

Die erfindungsgemässe Vorrichtung ist äusserst preiswert und erlaubt dennoch in sicherer Weise und ohne aufwendige Wartung auch über längere Zeiträume hinweg eine zuverlässige Messung der Menge der bei Betrieb einer $SF_6$-gefüllten, gekapselten elektrischen Anlage im Kapselungsinneren entstehenden Zersetzungsprodukte. Zudem ist die Vorrichtung sehr raumsparend ausgebildet und kann mit geringem Aufwand zusätzlich auch zur Messung und Überwachung der Dichte, gegebenenfalls aber auch des Druckes und der Temperatur, des in der Kapselung befindlichen Isoliergases verwendet werden.

Kurze Beschreibung der Zeichnungen

Nachfolgend wird die Erfindung anhand von Zeichnungen näher erläutert. Hierbei zeigen:

Fig.1  eine Aufsicht auf einen Schnitt durch einen Teil einer gasisolierten, gekapselten Schaltanlage mit einer Messvorrichtung nach der Erfindung,

Fig.2  ein Blockschaltbild einer ersten Ausführungsform der Messvorrichtung nach Fig.1,

Fig.3  ein Blockschaltbild einer zweiten Ausführungsform der Messvorrichtung nach Fig.1, und

Fig.4  ein Blockschaltbild einer dritten Ausführungsform der Messvorrichtung nach Fig.1.

Wege zur Ausführung der Erfindung

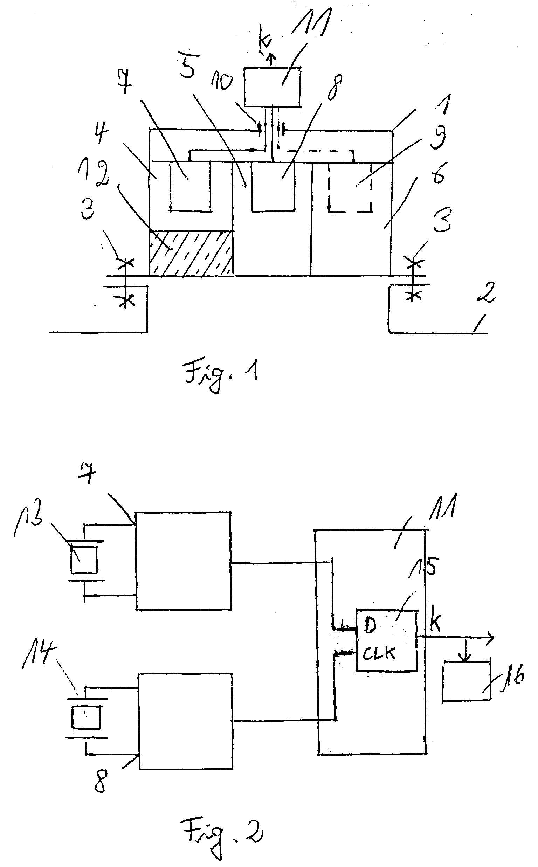

In Fig.1 bezeichnen die Bezugszeichen 1 und 2 Teile einer mit $SF_6$-Gas von beispielsweise einigen Bar Druck gefüllten Metallkapselung einer Hochspannungsschaltanlage. Das Teil 1 ist im wesentlichen deckelförmig ausgebildet und ist mittels einer Schraubverbindung 3 in gasdichter Weise an das Teil 2 angeflanscht. Das Teil 1 enthält drei gasdicht gegeneinander abgeschottete Teilräume 4,5 und 6. In den Teilräumen 4 bzw. 5 sind elektrische Schwingkreise 7 bzw. 8 untergebracht. Im Teilraum 6 kann ein elektrischer Schwingkreis 9 untergebracht werden. Die Versorgungsenergie der Schwingkreise 7, 8 und 9 wird einer nicht dargestellten Stromquelle entnommen. Die Ausgangssignale der Schwingkreise werden über nicht bezeichnete Anschlussleitungen und eine Durchführung 10 an eine Vergleichsvorrichtung 11 geführt, in der ein die Menge bzw. deren zeitabhängige Konzentration bestimmendes Signal k ermittelt und an einen Beobachter und/oder eine Überwachungsvorrichtung ausgegeben wird.

Die Schwingkreise 7 bzw. 8 enthalten jeweils dem $SF_6$-Gas ausgesetzte Oszillatoren, wohingegen in dem gegebenenfalls vorgesehenen Schwingkreis 9 ein Oszillator vorhanden ist, welcher unter Ausschluss der $SF_6$-Atmosphäre definierten Druckbedingungen, wie etwa einem Vakuum, ausgesetzt ist. Der Teilraum 4 ist an seiner Öffnung zum Inneren der Metallkapselung mit einem Filter 12 verschlossen. Dieses Filter adsorbiert im Inneren der Metallkapselung bei elektrischen Entladungen gebildete Zersetzungsprodukte des $SF_6$-Gases, lässt jedoch unzersetzte Gase, wie $SF_6$ oder gegebenenfalls zusätzlich vorgesehene andere Isoliergase - etwa Stickstoff - durch. Das Filter 12 kann gebildet sein von einem mit Molekularsieb, Aktivtonerde, Natronasbest, Natronkalk oder einer entsprechend wirkenden Substanz gefülltem Rohr. Der Teilraum 5 kommuniziert hingegen ohne ein Filter mit dem Kapselungsinneren.

Die Oszillatoren sind jeweils als Schwingquarz ausgeführt. Vorzugsweise handelt es sich um Stimmgabelquarze, welche jeweils durch eine an ihren Elektroden anliegende Wechselspannung in Schwingungen versetzt werden können. Umgebendes Gas erhöht die effektive Masse und die mechanische Schwingung des Resonators und führt zu einer dichteabhängigen Resonanzverschiebung. Der Zusammenhang zwischen Dichteänderung $\delta d$ und Frequenzverschiebung $\delta f$ ist im wesentlichen linear.In $SF_6$ beträgt diese Verschiebung beispielsweise ca. -4.7 Hz/kg m$^3$. Die Schwingquarze in den Schwingkreisen sind im wesentlichen gleich ausgeführt und weisen im Vakuum typischerweise jeweils eine Eigenfrequenz von ca. 32,7 kHz auf.

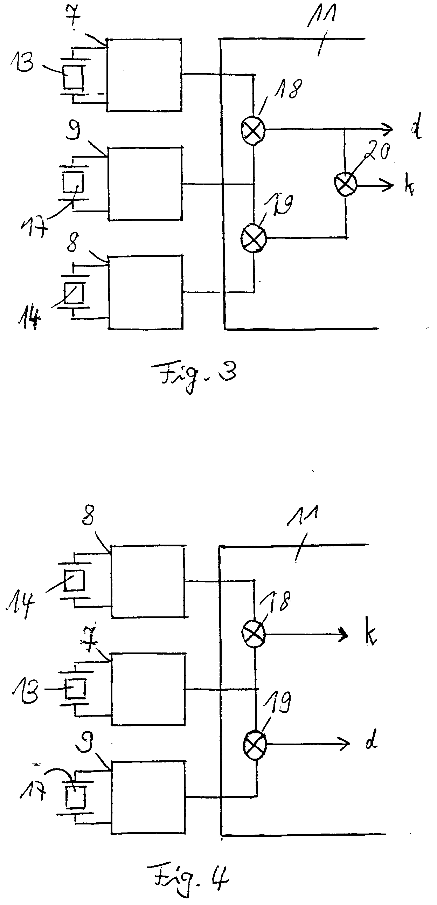

In Fig. 2 sind die den Schwingkreisen 7 bzw. 8 zugeordneten Oszillatoren mit den Bezugszeichen 13 bzw. 14 versehen. In einer bevorzugten Ausführungsform der Erfindung sind die Schwingkreise hierbei jeweils als Rechteckimpulse abgebende Inverterschaltung ausgeführt. Diese Rechteckimpulse enthalten die Information über die Eigenfrequenzen der Oszillatoren 13 und 14. Sie werden an den D-bzw. an den Takteingang eines in der Vergleichsvorrichtung 11 enthaltenen D-Flip-Flops 15 geführt. Das D-Flip-Flop 15 bildet durch Subtraktion der zugeführten Signale ein der Differenz der Eigenfrequenzen der Oszillatoren 13 und 14 entsprechendes Vergleichssignal k.

Entstehen nun während des Betriebes der Hochspannungsschaltanlage aufgrund elektrischer Entladungen und Restfeuchtigkeit gasförmige Zersetzungsprodukte, wie etwa $SF_4$, $WF_6$, $SOF_2$ und/oder HF, so gelangen diese in den Teilraum 5 und greifen den dort im Schwingkreis 8 befindlichen, ungeschützten Oszillator 14 an. Ist der angegriffene Oszillator als Schwingquarz ausgebildet, so werden dessen Oberflächenschichten in gasförmiges $SiF_4$ umgewandelt. Die Masse des Oszillators nimmt ab, wodurch seine Resonanzfrequenz und damit auch der Wert des Vergleichssignals k erhöht wird. Der Wert des Vergleichssignals k ist proportional der Menge bzw. der Konzentration der in der Anlage gebildeten Zersetzungsprodukte. Bei grossen Mengen an Zersetzungsprodukten und langer Wirkungsdauer können bei Eigenschwingungen der Oszillatoren von beispielsweise 32,7 kHz Frequenzdifferenzen bis zu 100 Hz auftreten. Das zugeordnete Signal kann problemlos detektiert werden, da das Verhältnis Frequenzdifferenz zu Eigenfrequenz des den Zersetzungsprodukten ausgesetzten Oszillators vergleichsweise gross ist.

Werden die Zersetzungsprodukte mit der Zeit von einer in der Hochspannungsschaltanlage befindlichen Filterpatrone adsorbiert so stabilisiert sich das der Frequenzdifferenz zwischen den beiden Oszillatoren 13 und 14 proportionale Signal k. Der Wert des stabilisierten Signals k ist ein Mass für die totale Menge der in der Hochspannungsschaltanlage entstandenen Zersetzungsprodukte. Tritt keine Stabilisierung ein, so bedeutet dies, dass die Filterpatrone gesättigt ist und ausgetauscht werden müsste.Durch ein der Vergleichsvorrichtung 11 nachgeschaltetes Kontrollelement 16, welches den Anstieg des Signals k überwacht, kann so in einfacher Weise die Funktionsbereitschaft der Filterpatrone überprüft werden.

Bei Ausgestaltung der erfindungsgemässen Messvorrichtung nach den Figuren 3 und 4, kann mit lediglich geringem zusätzlichem Aufwand neben der Menge der gebildeten Zersetzungsprodukte beispielsweise zwecks Leckageüberwachung zugleich auch die Dichte des $SF_6$-haltigen Isoliergases gemessen werden. Hierzu ist in den in den Figuren 3 und 4 angegebenen Ausführungsformen der erfindungsgemässen Messvorrichtung jeweils ein unter Ausschluss der $SF_6$-Atmosphäre definierten Druckbedingungen, etwa Vakuum, ausgesetzter und im Schwingkreis 9 angeordneter Oszillator 17 vorgesehen. Dieser als Referenzelement wirkende Oszillator 17 weist unter gleichen äusseren Bedingungen die gleiche Eigenfrequenz wie die Oszillatoren 13 und 14 auf. Zudem enthält die Vergleichsvorrichtung 11 mindestens zwei Subtrahierer 18 und 19.

Bei der Ausführungsform der erfindungsgemässen Messvorrichtung nach Fig.4 nimmt der Subtrahierer 18 das Ausgangssignal des Schwingkreises 7 und dasjenige des Schwingkreises 8 auf, wohingegen der Subtrahierer 19 das Ausgangssignal des Schwingkreises 7 und dasjenige des Schwingkreises 9 aufnimmt. Im Subtrahierer 18 wird hierbei das der Menge bzw. der Konzentration der Zersetzungsprodukte proportionale Signal k gebildet, im Subtrahierer 19 hingegen ein der Dichte der $SF_6$-haltigen Atmosphäre proportionales Signald. Bei der Ausführungsform der erfindungsgemässen Messvorrichtung nach Fig.3 nimmt der Subtrahierer 18 das Ausgangssignal des Schwingkreises 7 und dasjenige des Schwingkreises 9 auf, wohingegen der Subtrahierer 19 das Ausgangssignal des Schwingkreises 8 und dasjenige des Schwingkreises 9 aufnimmt. Ferner ist noch ein dritter Subtrahierer 20 vorgesehen, auf den die Ausgangssignale der Subtrahierer 18 und 19 wirken. Entsprechend der Ausführungsform nach Fig.4. werden auch bei der Ausführungsform nach Fig.3 ein der Menge bzw. der Konzentration proportionales Signal k sowie ein der Dichte der $SF_6$-haltigen Atmosphäre proportionales Signal d gebildet. Im Gegensatz zur Ausführungsform nach Fig.4 wird jedoch zur Bildung des Vergleichssignals k noch der zusätzliche Subtrahierer 20 benötigt.

Hierdurch wird eine gegenüber der Ausführungsformen nach den Figuren 2 und 4 erheblich verbesserte Verarbeitbarkeit und damit wesentlich erhöhte Genauigkeit erreicht . Dies ist dadurch bedingt, dass im Subtrahierer 20 bei der Ermittlung des Signals k von den vergleichsweise hohen Eigenfrequenzsignalen der Oszillatoren unabhängige niedrige Frequenzdifferenzen miteinander verglichen werden. Hierdurch ist es möglich, selbst kleine Mengen an Zersetzungsprodukten, welche die Eigenfrequenz des den Zersetzungsprodukten ausgesetzten Oszillators 14 lediglich im mHz-Bereich erhöhen, mit einfachen Mitteln nachzuweisen.

Um ein möglichst fehlerfreies Messen zu gewährleisten, ist es zu empfehlen, den den Zersetzungsprodukten ausgesetzten Oszillator 14 an einer gegenüber Angriffen der Zersetzungsprodukte geschützten Halterung zu befestigen. Eine solche Halterung ist vorzugsweise von einem kunststoffversiegelten Glassockel gebildet.

Die mit einem $SF_6$ enthaltendem Gas gefüllte elektrische Anlage muss nicht notwendigerweise eine gekapselte Hochspannungsschaltanlage sein, sondern kann irgendeine $SF_6$ enthaltende Anlage für Hoch-, Mittel- oder Niederspannungsanwendungen sein, in der das $SF_6$ zersetzende, elektrische Entladungen auftreten können.

**Patentansprüche**

1. Vorrichtung zur Messung der bei einer elektrischen Entladung in $SF_6$-haltiger Atmosphäre entstehenden Zersetzungsprodukte, gekennzeichnet durch zwei im $SF_6$ befindliche und jeweils in einem ersten (8) oder zweiten (7) Schwingkreis angeordnete und mit den Zersetzungsprodukten chemisch reagierende Oszillatoren (13, 14), von denen ein erster (14) den Zersetzungsprodukten ausgesetzt und ein zweiter (13) davor geschützt ist, sowie durch eine Vergleichsvorrichtung (11), welcher die Ausgangssignale des ersten (8) und des zweiten (7) Schwingkreises zugeführt werden.

2. Vorrichtung nach Anspruch 1, dadurch gekennzeichnet, dass die Vergleichsvorrichtung (11) als Subtrahierer ausgebildet ist.

3. Vorrichtung nach einem der Ansprüche 1 oder 2, dadurch gekennzeichnet, dass der Vergleichsvorrichtung (11) ein Kontrollelement (16) nachgeschaltet ist, welches den Anstieg eines von der Vergleichsvorrichtung (11) als Frequenzdifferenz abgegebenen Vergleichssignals (k) überwacht.

4. Vorrichtung nach einem der Ansprüche 1 bis 3, dadurch gekennzeichnet, dass ein unter Ausschluss der $SF_6$-Atmosphäre definierten Druckbedingungen ausgesetzter dritter Oszillator (17) vorgesehen ist, welcher in einem dritten Schwingkreis (9) angeordnet ist, dessen Ausgangssignal der Vergleichsvorrichtung (11) zugeführt wird.

5. Vorrichtung nach Anspruch 4, dadurch gekennzeichnet, dass die Vergleichsvorrichtung (11) zwei Subtrahierer (18, 19) aufweist, von denen ein erster (18) die Ausgangssignale des ersten (8) und des zweiten (7) Schwingkreises und ein zweiter (19) die Ausgangssignale des zweiten (7) und des dritten (9) Schwingkreises aufnimmt.

6. Vorrichtung nach Anspruch 4, dadurch gekennzeichnet, dass die Vergleichsvorrichtung (11) drei Subtrahierer (18, 19, 20) aufweist, von denen ein erster (19) die Ausgangssignale des ersten (8) und des dritten (9) Schwingkreises, ein zweiter (18) die Ausgangssignale des zweiten (7) und des dritten (9) Schwingkreises und ein dritter (20) die Ausgangssignale des ersten (19) und des (18) zweiten Subtrahierers aufnimmt.

7. Vorrichtung nach einem der Ansprüche 1 bis 6, dadurch gekennzeichnet, dass die Schwingkreise jeweils als Inverterschaltung ausgeführt sind und als Ausgangssignale Rechteckimpulse abgeben, welche mindestens einem ein D-Flip-Flop (15) enthaltenden Subtrahierer der Vergleichsvorrichtung (11) zugeführt werden.

8. Vorrichtung nach einem der Ansprüche 1 bis 7, dadurch gekennzeichnet, dass der vor den Zersetzungsprodukten geschützte zweite Oszillator (13) sowie ein die Zersetzungsprodukte adsorbierendes und $SF_6$ durchlassendes Filter in einem mit der $SF_6$-Atmosphäre kommunizierenden Behälter (4) angeordnet sind.

9. Vorrichtung nach einem der Ansprüche 1 bis 8, dadurch gekennzeichnet, dass der den Zersetzungsprodukten ausgesetzte erste Oszillator (14) an einer gegenüber den Angriffen der Zersetzungsprodukten geschützten Halterung befestigt ist.

10. Vorrichtung nach Anspruch 9, dadurch gekennzeichnet, dass die Halterung von einem kunststoffversiegelten Glassockel gebildet ist.

11. Vorrichtung nach einem der Ansprüche 1 bis 10, dadurch gekennzeichnet, dass die Oszillatoren (13,14,17) jeweils als Schwingquarz ausgebildet sind.

Fig. 1

Fig. 2

Fig. 3

Fig. 4

Europäisches
Patentamt

**EUROPÄISCHER RECHERCHENBERICHT**

Nummer der Anmeldung

EP 90 12 1198

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (Int. Cl.5) |
|---|---|---|---|
| Y | PATENT ABSTRACTS OF JAPAN, Band 011-252 (P-605), 15. August 1987; & JP-A-62 058 148 (MITSUBISHI ELECTRIC CORP.) 13-03-1987 --- | 1,2 | G 01 N 27/00 |
| Y | PATENT ABSTRACTS OF JAPAN, Band 10, Nr. 106 (P-449)[2163], 22. April 1986; & JP-A-60 238 742 (KOGYO GIJUTSUIN) 27-11-1985 --- | 1,2 | |
| A | J. PHYS. E: SCI. INSTRUM., Band 19, Nr. 4, April 1986, Seiten 271-274; C. HAMILTON et al.: "A gas analyser based on the quartz crystal adsorption technique" * Zusammenfassung; Figur 2 * --- | 1,2 | |
| A | EP-A-0 119 772 (SECRETARY OF STATE OF SOCIAL SERVICES et al.) * Seite 3, Zeile 6 - Seite 4, Zeile 19; Zusammenfassung; Figuren 1,2 * --- | 1,2,8, 11 | |
| A | DE-A-2 328 919 (VEB KOMBINAT LUFT- UND KÄLTETECHNIK) * Seite 6, Absatz 4 - Seite 8, Absatz 1; Figur 4 * --- | 1,4,5 | RECHERCHIERTE SACHGEBIETE (Int. Cl.5) G 01 N |
| A | EP-A-0 101 669 (ASULAB S.A.) * Seite 7, Zeile 12 - Seite 8, Zeile 19; Seite 14, Zeile 1 - Seite 19, Zeile 10; Zusammenfassung; Figuren 1,5 * --- | 1,7 | |
| A | EP-A-0 072 744 (THE BENDIX CORP.) * Seite 6, Zeile 12 - Seite 8, Zeile 29; Zusammenfassung; Figuren 6,7 * ----- | 1,4,5 | |

Der vorliegende Recherchenbericht wurde für alle Patentansprüche erstellt

| Recherchenort | Abschlußdatum der Recherche | Prüfer |
|---|---|---|
| DEN HAAG | 21-06-1991 | BOSMA R.A.P. |